# FASCICULE DE BREVET EUROPEEN

(11) **EP 1 223 512 B1**
(45) Date de publication et mention de la délivrance du brevet: **07.07.2004**
(21) Numéro de dépôt: 02290024.5
(22) Date de dépôt: 07.01.2002
(51) Int. Cl.: G06F 11/16, H04L 12/56, H04L 29/14, G06F 11/14

(54) **Système de routage assurant la continuité de service, des machines à états associées aux systèmes de routage voisins**
Wegeleitsystem zur Sicherstellung der Kontinuität der Dienste, zu Nachbar-Wegeleitsystemen assoziierte Zustandsmaschinen
Routing system guaranteeing the service continuity of interfaces, Finite State Machine associated to neighbouring routing systems

(30) Priorité: 11.01.2001 FR 0100306
(43) Date de publication de la demande: 17.07.2002
(73) Titulaire: ALCATEL, 75008 Paris (FR)
(72) Inventeur: Rombeaut, Jean-Pierre, 59600 Maubeuge (FR); Saintillan, Yves, 91300 Massy (FR)
(74) Mandataire: Sciaux, Edmond

(56) Documents cités:
- US-A- 5 473 599
- J. MOY: "IETF STD. 54 (RFC 2328): OSPF Version 2" [en ligne] avril 1998 (1998-04) , IETF XP002176606 Extrait de l'Internet: <URL: ftp://ftp.isi.edu/in-notes/rfc2328.txt> [extrait le 2001-09-04] * page 80, ligne 4 - ligne 13 * * page 83, ligne 1 - ligne 13 *

## Description

Le présente invention concerne la continuité du service de routage dans un réseau de type Internet. Plus, précisément, l'invention s'applique particulièrement bien au protocole de routage OSPF (Open Shortest Path First) tel que défini dans le RFC 2328 de l'IETF (*Internet Engineering Task Force*).

Le protocole OSPF est un protocole de la famille TCP/IP permettant aux systèmes de routage (ou routers selon la terminologie en langue anglaise) d'un réseau Internet d'avoir une connaissance suffisante du réseau pour pouvoir acheminer correctement les paquets reçus vers leur destination.

La particularité du protocole OSPF est d'être un protocole de routage dynamique, c'est-à-dire capable de prendre en compte les changements dans la topologie du réseau de façon dynamique. Pour ce faire, le protocole comporte des étapes d'échange de messages de façon périodique, afin de mettre constamment à jour la connaissance que possède chaque système de routage du réseau ou d'une partie du réseau.

Un système de routage possède des connexions avec d'autres systèmes de routage. Ces connexions peuvent être de différentes natures telles :
- Les réseaux point-à-point (*Point to point networks*),
- Les réseaux à accès multiple (*Multi-access networks*), par exemple de type Ethernet™,
- Les réseaux connus sous le nom de « stub network » et permettant la connexion d'un ensemble de stations hôtes.

En fonction, du type de connexion et du statut du système de routage, il est nécessaire ou non de mettre en oeuvre une mise en adjacence du système de routage avec un autre système de routage.

Le mise en adjacence de deux systèmes de routage consiste à faire en sorte qu'ils partagent exactement les mêmes informations sur la topologie du réseau.

Dans certains cas, en effet, il n'est pas nécessaire d'effectuer une mise en adjacence de deux systèmes de routage. Par exemple, dans le cas d'un réseau à accès multiple, par soucis d'optimisation, la mise en adjacence ne sera mise en oeuvre qu'entre chaque système de routage et un système de routage élu comme système de routage désigné.

Selon le protocole OSPF, ce système de routage R₁ échange avec ces systèmes de routage voisins différents types de messages, comme des messages de description de base d'informations (ou message DDP pour Database Description Packet, en anglais), des messages « hello », des messages de transmission d'informations, LS Update, des messages de demandes d'informations, LS Request, et des messages d'accusé de réception, LS Acknowledge.

Les messages « hello » ont pour but d'informer périodiquement les autres systèmes de routage que l'émetteur est toujours actif.

Les messages de transmission d'informations permettent de recevoir des informations sur les systèmes de routage composant le réseau, tandis que les messages de demande d'informations permettent de demander des informations sur les systèmes de routage

En effet, conformément au protocole OSPF, chaque système de routage possède une table de routage lui permettant d'acheminer correctement les messages qu'il reçoit. Du fait de l'aspect dynamique du réseau, ces tables de routage doivent être constamment remises à jour.

Ces mises à jour sont effectuées notamment par l'intermédiaire d'échanges de messages contenant des informations parcellaires sur le réseau appelées LSA pour « Link State Advertisment ». Les tables de routage étant calculées par chaque système de routage à partir de ces informations.

Les messages de transmission d'informations, LS Update, sont en fait des collections d'informations parcellaires LSA.

Un troisième type de messages sont les messages de description de base d'informations ou DDP. Ces messages permettent à deux systèmes de routage d'échanger des résumés d'informations parcellaires LSA, c'est-à-dire une description du contenu de leur base d'informations.

Ces différents messages sont plus amplement décrit dans le RFC 2328 précédemment mentionné.

Selon le protocole OSPF, il est par ailleurs prévu d'associer une machine à états à chaque système de routage voisin d'un système de routage.

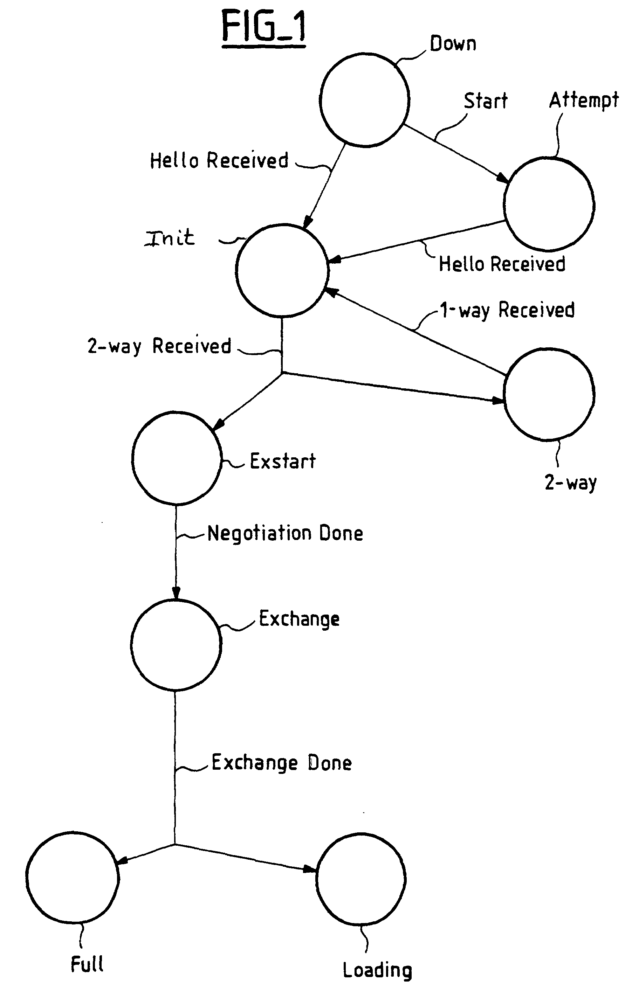

La figure 1 représente une telle machine à états. Selon l'usage, les cercles représentent les états dans lesquels la communication avec un voisin peut être. A tout moment, la communication avec un voisin est obligatoirement dans un de ces états. Chaque flèche dans ce diagramme représente une transition, c'est-à-dire le passage d'un état dans un autre. Le nom des états est indiqué en langue anglaise ainsi qu'il peut être trouvé dans le RFC 2328 de l'IETF.

L'état initial de cette machine à états est représenté par le cercle référencé « Down ».

Lorsque le système de routage reçoit un message « hello », l'événement « Hello Received » est généré et la machine à états passe dans un état « Init ». L'événement « Start » est généré lorsqu'un message « hello » doit être généré en premier lieu par le système de routage, dans le cas d'un réseau à accès multiples sans diffusion (*« non-broadcast multiple access network »,* en anglais). Auquel cas, la machine à états passe dans l'état « Attempt ». La réception d'un message « hello » en réponse génère alors un événement « Hello Received » et le passage de la machine à états dans l'état « Init ».

En fonction notamment du type de connexion et du statut du système de routage, l'arrivée d'un événement « 2-way Received » fait passer la machine à états soit dans un état « ExStart », soit dans un état « 2-way ».

L'état « 2-way » est atteint lorsque le type de connexion ne nécessite pas une mise en adjacence entre les deux systèmes de routage. C'est par exemple le cas s'ils sont membres d'un réseau à accès multiple et qu'aucun des deux n'est système de routage désigné. Cet état est un état stable mais qui peut être remis en question par l'arrivée d'un événement « 1-Way received » signifiant que la connexion entre les deux systèmes de routage a eu un problème et que la machine à états doit revenir dans l'état « Init ».

L'état « ExStart » est atteint lorsqu'au contraire, il est nécessaire d'effectuer une mise en adjacence des deux systèmes de routage. Durant cet état, le système de routage négocie avec son homologue afin de déterminer un maître et un esclave, par l'envoi de messages DDP sans données.

Une fois cette négociation faite, un événement « NegociationDone » survient et la machine à états passe dans l'état « Exchange ».

Durant cet état, les deux systèmes de routage échangent des messages de description de la base d'informations, autrement dit des messages DDP.

Lorsque les deux systèmes ont échangé la description de la totalité de leurs informations, l'événement « ExchangeDone » survient.

Deux cas se présentent alors :
- Soit, il s'avère que les deux systèmes de routage possèdent les mêmes informations sur le réseau. Ils sont donc en adjacence et la machine à états passe dans l'état « Full ».
- Soit, il y a une divergence et le système de routage ayant les informations les moins à jour, demande à l'autre système de routage la transmission de message d'échanges d'informations (LS request) afin de remettre ses informations à jour. La machine à états passe, pour cela, dans l'état « Loading ».

Classiquement, lorsqu'un système de routage est redémarré, par exemple à la suite d'une défaillance, la machine à états doit redémarrer depuis l'état « Down ». L'autre système de routage est alors alerté de ce changement d'état et peut aussi subir un changement d'état.

Or, il apparaît clairement que refaire le cheminement de la machine à états depuis l'état « Down » jusqu'à un état terminal comme « 2-way » ou « Full » est long et peut engendrer un fort trafic sur le réseau (échange de messages DDP etc.)

Afin de minimiser les conséquences d'une défaillance d'un système de routage ou de son arrêt temporaire pour maintenance, on peut mettre en oeuvre une redondance des systèmes de routage : un système de routage en veille devient actif lorsque le système de routage actif s'arrête, par exemple à la suite d'une défaillance ou d'un arrêt volontaire pour maintenance.

Une telle solution est notamment mise en oeuvre par la société Cisco dans le protocole HSRP (*Hot Standby Router Protocol*) qui est par exemple décrit à l'adresse internet suivante :
http://www.cisco.com/warp/public/619/hsrpguidetoc.html

Une autre solution de redondance est décrite dans le RFC 2338 de l'IETF, intitulé « *Virtual Router Redundancy Protocol* ».

Toutefois, là encore, lorsqu'à la suite de la défaillance d'un premier système de routage, à l'état actif, le deuxième système de routage (jusque alors en veille) prend la main, les machines à états gérant les systèmes de routage voisins du système de routage en question, doivent redémarrer à l'état « down ».

Ceci a pour conséquence un laps de temps d'indisponibilité du second système de routage avant qu'il ne puisse retrouver l'état qui était celui du premier avant sa défaillance ou son arrêt. Classiquement, ce délai est au moins égal à 40 secondes et généralement de l'ordre d'une minute.

Ce redémarrage des machines à états a aussi pour inconvénient de provoquer des changements dans les états des systèmes de routage voisins.

L'invention a pour but de palier ces inconvénients. Pour ce faire, l'invention a pour objet un système de routage composé :
- d'au moins deux modules de routage, un seul étant dans un état actif à un instant donné, les autres étant dans un état de veille, et
- d'un moyen permettant de basculer un des autres modules de routage d'un état de veille à un état actif lors de l'arrêt du module de routage à l'état actif.

Le système de routage est connecté à des systèmes de routage voisins, et les modules de routage comportent des machines à états associées à chacun de ces systèmes de routage voisins.

Ce système de routage se caractérise en ce que chacun des modules de routage possède en outre
- un moyen pour, à l'état actif, mémoriser des informations relatives à l'état des machines à états lorsque celles-ci sont dans un état stable, et
- un moyen pour récupérer ces informations lors d'un basculement du module de routage vers l'état actif.

Ainsi, par le biais de la mémorisation, le module de routage dans l'état de veille est à même de prendre la main dans le même état que celui dans lequel était le module de routage à l'état actif avant son arrêt ou sa défaillance.

Le basculement du module de routage à l'état actif vers le module de routage à l'état de veille se passe de façon transparente pour les autres systèmes de routage du réseau, et sans engendrer de délai de non disponibilité.

L'invention et ses avantages apparaîtront de façon plus claire dans la description d'une mise en oeuvre qui va suivre, en liaison avec les figures jointes.

La figure 1, déjà commentée, représente la machine à états gérant la communication associée à un système de routage voisin.

La figure 2 illustre une vue détaillée de l'état « Exchange » conformément à l'invention.

La figure 3 représente un réseau à accès multiple formé par 3 systèmes de routage.

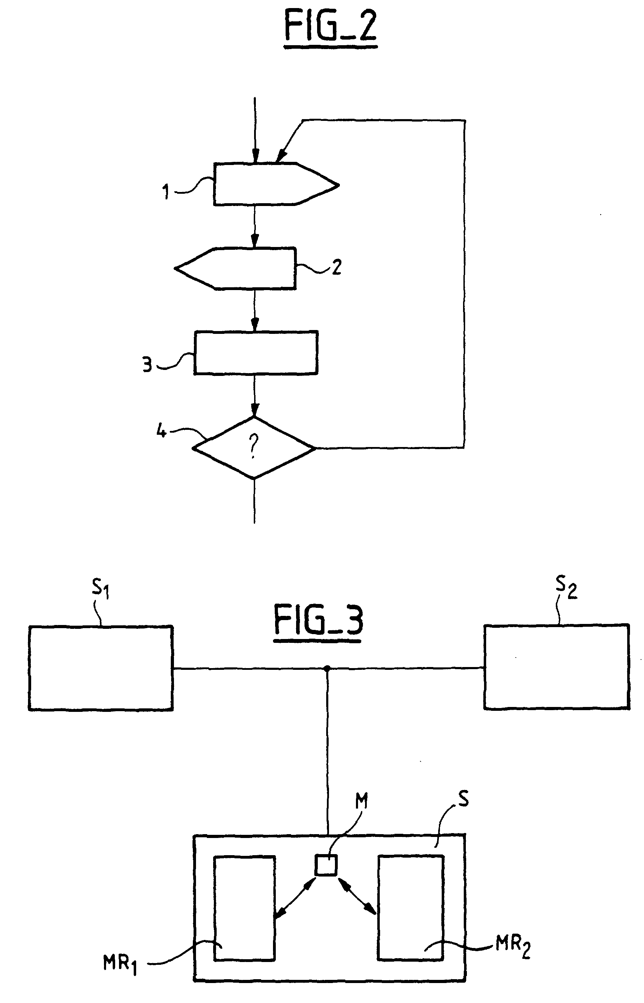

Sur cette figure 3, on voit que le système de routage S comprend deux modules de routage MR₁ et MR₂. Ces deux modules de routage réalisent les mêmes fonctions que ceux de l'état de la technique.

Toutefois, ces deux modules de routage disposent de surcroît de moyens pour communiquer entre eux.

Plus précisément, chacun des modules de routage MR₁ et MR₂ possède un moyen pour mémoriser des informations relatives à l'état de ses machines à états, lorsque celle-ci est dans un état stable, et un moyen pour récupérer ces informations. Comme il sera expliqué plus tard, ce moyen pour mémoriser peut être un moyen d'écriture dans une mémoire partagée M, et le moyen pour récupérer peut être un moyen de lecture dans cette même mémoire partagée M. Toutefois, d'autres mises en oeuvre de l'invention sont possibles, notamment en utilisant un bus logiciel tel CORBA (*Common Object Request Broker Architecture)*

À un instant donné, seul un des deux modules de routage est à l'état actif, c'est-à-dire remplissant son rôle de système de routage. L'autre module de routage est en état de veille, c'est-à-dire qu'il est invisible par le réseau mais prêt pour prendre le rôle du module de routage actif en cas de défaillance ou d'arrêt de celui-ci.

La mémorisation des informations n'est mise en oeuvre que par le module de routage à l'état actif, à chaque fois que la machine à états rentre dans un état stable.

Ces états stables peuvent être les états « Down », « Init », « Exstart », « 2-way », « Exchange », « Full » et « Loading », c'est-à-dire les états pour lesquels la connexion est déterminée.

Selon une mise en oeuvre de l'invention, on ajoute à cette liste l'état de la machine à états après un échange de message de description de base d'informations.

Comme dit précédemment, une fois dans l'état « Exchange », le module de routage échange avec son voisin des messages de description de base d'informations. Cet état supplémentaire est celui de la machine à état lorsque le système de routage voisin associé a réalisé un échange de messages avec le même identifiant de séquence (ou *sequence number*, selon la terminologie habituelle), c'est à dire qu'elle a reçu un message de description de base d'informations et émis un message de description de base d'informations.

Cet état supplémentaire est illustré par la figure 2, qui représente une vue en détail de l'état « Exchange ». Dans cet état, le module de routage procède à une étape d'émission d'un message de description de base d'information, illustrée par la boîte 1, et une étape de réception d'un message de description de base d'informations, illustrée par la boîte 2. Ces deux messages de description de base d'informations comportent un même identifiant de séquence. L'ordre de ces deux étapes dépend du statut du module de routage, c'est-à-dire de s'il est maître ou esclave dans cet échange.

A la suite de cet échange, les informations transmises par les messages de description de base d'informations sont mémorisées, dans une étape illustrée par la boîte 3. Puis, une étape référencée 4 consiste à tester si un nouvel échange doit être mis en oeuvre.

Les informations à mémoriser contiennent au moins un identifiant de l'état de la machine à états. Toutefois, il est possible de mémoriser aussi d'autres informations afin de faciliter le démarrage du module de routage en veille, en cas de besoin.

Selon une mise en oeuvre de l'invention, on mémorise des informations relatives aux systèmes de routage voisins lors de la création de la machine à états et lors de sa suppression. Ces informations sont celles permettant la création de la machine à états conformément à la section 10 du RFC 2328 précédemment évoqué.

Selon une mise en oeuvre de l'invention, lorsque la machine à états est à l'état « Full », tout message de transmission d'informations, LS Update, reçu est mémorisé.

La figure 3 illustre un mode de réalisation particulier mettant en oeuvre une mémoire partagée.

Selon cet exemple, le système de routage S comporte deux voisins S₁ et S₂. Par conséquent, chacun des modules de routage MR₁ et MR₂ possède deux machines à états, une associée au voisin S₁ et l'autre associée au voisin S₂.

Dans l'exemple, on suppose que le système de routage S₁ a précédemment été élu système de routage désigné. Aussi, le système de routage S doit entrer en adjacence avec ce système de routage S₁. Par conséquent, dans le système de routage S, la machine à états associée au système de routage S₁ est à l'état « Full » et celle associée au système de routage S₂ est à l'état « 2-way ».

S'agissant d'états stables ainsi que définis précédemment, un identifiant de l'état est mémorisé par le module de routage à l'état actif (par exemple MR₁) dans la mémoire partagée M.

Lorsque ce module de routage MR₁ devient non opérationnel, par exemple à la suite d'un arrêt pour maintenance ou d'une défaillance, le module de routage MR₂ passe de l'état de veille à celui d'état actif.

À ce moment, le module de routage MR₂ peut relire d'une part les informations relatives à l'état des deux machines à états, et d'autre part des informations relatives aux systèmes de routage voisins, mémorisées lors de la création des machines à états.

Ainsi, le module de routage MR₂ sait qu'il doit forcer le passage de ces deux machines à états à l'état « Full » pour celle associée au système de routage S₁ et à l'état « 2 way » pour celle associée au système de routage S₂.

Le module de routage MR₂ peut alors reprendre le rôle du module de routage MR₁ de façon très rapide et transparente pour les autres modules de routage du réseau.

D'autres modes de réalisation sont bien évidemment à la portée de l'homme du métier. Notamment, les deux modules de routage peuvent communiquer via un moyen de communication inter-processus. Ce moyen de communication inter-processus peut par exemple être un bus logiciel, tel le bus logiciel CORBA conforme aux spécifications de l'OMG (*Object Management Group*).

L'étape de mémorisation peut alors être précédée d'une étape d'émission des informations vers le module de routage en veille, à charge pour lui de mémoriser ces informations de sorte qu'ils puissent les récupérer lors d'un basculement d'états.

## Revendications

1. Système de routage (S) composé d'au moins deux modules de routage (MR₁, MR₂), un seul étant dans un état actif à un instant donné, les autres étant dans un état de veille, et d'un moyen permettant de basculer un desdits autres modules de routage d'un état de veille à un état actif lors de l'arrêt du module de routage à l'état actif, ledit système de routage étant connecté à des systèmes de routage voisins (S₁, S₂), et lesdits modules de routage comportant des machines à états associées à chacun desdits systèmes de routage voisins, **caractérisé en ce que** chacun desdits modules de routage possède en outre un moyen (M) pour, à l'état actif, mémoriser des informations relatives à l'état desdites machines à états lorsque celles-ci sont dans un état stable, et un moyen pour récupérer lesdites informations lors d'un basculement du module de routage vers l'état actif.

2. Système de routage selon la revendication 1, dans lequel la mémorisation desdites informations est réalisée par une mémoire partagée entre lesdits modules de routage.

3. Système de routage selon la revendication 1, dans lequel la mémorisation desdites informations est réalisée par un moyen de communication inter-processus permettant auxdits modules de routage de communiquer entre eux.

4. Système de routage selon la revendication 3, dans lequel ledit moyen de communication inter-processus est un bus logiciel de type CORBA.

5. Système de routage selon l'une des revendications 1 à 4, dans lequel chacun desdits modules de routage dispose de surcroît d'un moyen pour mémoriser des informations relatives au système de routage voisin associé, lors de la création de celle-ci, et un moyen pour récupérer ces informations lors d'un basculement à l'état actif.

6. Système de routage selon l'une des revendications précédentes, dans lequel un état stable est un état de la liste contenant les états « Down », « Init », « ExStart », « 2-way », « Exchange », « Full » et « Loading ».

7. Système de routage selon la revendication précédente, dans lequel ladite liste comporte de surcroît l'état de la machine à états après un échange de description de base d'informations.

8. Système de routage selon l'une des revendications 6 ou 7, dans lequel chacun desdits modules de routage dispose de moyens pour mémoriser tout message de transmission d'informations reçu, alors que la machine à états correspondante est à l'état « Full ».

## Patentansprüche

1. Routing-System (S), bestehend aus mindestens zwei Routing-Modulen (MR₁, MR₂), von denen eines zu einem gegebenen Zeitpunkt in einem aktiven Zustand ist und von denen die anderen in einem Bereitschaftszustand sind, sowie aus einer Vorrichtung, die bei einer Betriebsunterbrechung des im aktiven Zustand befindlichen Routing-Moduls das Umschalten eines der besagten anderen Routing-Module von einem Bereitschaftszustand auf einen aktiven Zustand gestattet, wobei besagtes Routing-System mit benachbarten Routing-Systemen (S₁, S₂) verbunden ist und besagte Routing-Module Zustandsautomaten beinhalten, die den einzelnen benachbarten Routing-Systemen zugeordnet sind, **dadurch gekennzeichnet, daß** jedes der besagten Routing-Module außerdem eine Vorrichtung (M) besitzt, um im aktiven Zustand Informationen im Zusammenhang mit dem Zustand der besagten Zustandsautomaten zu speichern, wenn diese sich in einem stabilen Zustand befinden, sowie eine Vorrichtung zur Wiedergewinnung besagter Informationen bei einem Wechsel des Routing-Moduls in den aktiven Zustand.

2. Routing-System gemäß Anspruch 1, bei welchem die Speicherung besagter Informationen mit einem von den besagten Routing-Modulen gemeinsam genutzten Speicher bewerkstelligt wird.

3. Routing-System gemäß Anspruch 1, bei welchem die Speicherung besagter Informationen mit einer Vorrichtung zur prozeßübergreifenden Kommunikation bewerkstelligt wird, welche besagten Routing-Modulen die Kommunikation untereinander ermöglicht.

4. Routing-System gemäß Anspruch 3, bei welchem besagte Vorrichtung zur prozeßübergreifenden Kommunikation ein Software-Bus vom Typ CORBA ist.

5. Routing-System gemäß einem der Ansprüche 1 bis 4, bei welchem jedes der besagten Routing-Module außerdem über eine Vorrichtung zum Speichern von Informationen im Zusammenhang mit dem zugeordneten benachbarten Routing-System bei deren Einrichtung sowie über eine Vorrichtung zur Wiedergewinnung dieser Informationen bei einem Wechsel in den aktiven Zustand verfügt.

6. Routing-System gemäß einem der vorgenannten Ansprüche, bei welchem ein stabiler Zustand ein Zustand in einer Liste ist, welche die Zustände "Down", "Init", "ExStart", "2-way", "Exchange", "Full" und "Loading" enthält.

7. Routing-System gemäß dem vorgenannten Anspruch, bei welchem besagte Liste ferner den Zustand des Zustandsautomaten nach einem Austausch einer Beschreibung von Datenbanken beinhaltet.

8. Routing-System gemäß einem der Ansprüche 6 und 7, bei welchem jedes der besagten Routing-Module über Vorrichtungen zum Speichern aller empfangenen Mitteilungen zur Informationsübermittlung verfügt, wenn sich der zugehörige Zustandsautomat im Zustand "Full" befindet.

## Claims

1. A router (S) made up firstly of at least two router modules (MR₁, MR₂), only one of which is in an active state at any given time, the others being in a standby state, and secondly of changeover means making it possible to cause one of said other router modules to go from a standby state to an active state when the router module in the active state stops, said router being connected to neighbor routers (S₁, S₂), and said router modules having state machines associated with each of said neighbor routers, said router being **characterized in that** each of said router modules further has data storage means (M) which, in the active state, enable it to store data relating to the states of the state machines, when said machines are in stable states, and data retrieval means for retrieving said data when the router module changes over to the active state.

2. A router according to claim 1, in which said data is stored by a shared memory that is shared between said router modules.

3. A router according to claim 1, in which said data is stored by inter-process communications means enabling said router modules to communicate with one another.

4. A router according to claim 3, in which said inter-process communications means are a software bus of the CORBA type.

5. A router according to any one of claims 1 to 4, in which each of said router modules further has means for storing data relating to the associated neighbor router when said neighbor router is created, and means for retrieving said data when a changeover to the active state takes place.

6. A router according to any preceding claim, in which a stable state is a state from the following list: "Down", "Init", "ExStart", "2-way", "Exchange", "Full", and "Loading".

7. A router according to the preceding claim, in which said list further includes the state of the state machine after a Database Description Packet (DDP) exchange.

8. A router according to claim 6 or 7, in which each of said routers has means for storing any data transmission message received, even though the corresponding state machine is in the "Full" state.
